Europäisches Patentamt

European Patent Office

Office européen des brevets

(19)

(11) Publication number: **0 051 953**
A1

# EUROPEAN PATENT APPLICATION

(12)

(21) Application number: **81305045.7**

(51) Int. Cl.³: **F 16 C 37/00**

(22) Date of filing: **26.10.81**

(30) Priority: **30.10.80 JP 153287/80**

(43) Date of publication of application: **19.05.82**
Bulletin 82/20

(84) Designated Contracting States: **DE FR GB**

(71) Applicant: **NAKAMURA TOME PRECISION INDUSTRY CO., LTD., No. 15, Netsuno- Machi, Tsurugi-machi, Ishikawa Gun Ishikawa Prefecture (JP)**
Applicant: **MITSUBISHI DENKI KABUSHIKI KAISHA, 2-3, Marunouchi 2-chome Chiyoda-ku, Tokyo 100 (JP)**

(72) Inventor: **Shibata, Souichi Nakamura Tome Precision Ind. Co., No. 15, Netsuno-machi, Tsurugi-machi, Ishikawa gun, Ishikawa Prefecture (JP)**
Inventor: **Inoue, Hitoshi Kobe Works Mitsubishi Denki K. K., 1-2, Wadasaki-cho, 1-chome, Hyogo-ku Kobe Hyogo Prefecture (JP)**
Inventor: **Katazawa, Kenji, Hokuriku Sales Office Mitsubishi Denki K. K., 1-29, Sakuragi-cho, Toyama Pref. (JP)**

(74) Representative: **Messulam, Alec Moses et al, MARKS & CLERK 57/60 Lincoln's Inn Fields, London WC2A 3LS (GB)**

(54) **A cooling device for a bearing.**

(57) A bearing support (3, 4) adapted to mount the bearing means (2) in position is formed with a hollow chamber (8, 9) part filled with a working fluid (14) such as ammonia, fluorocarbon, etc. to cool the bearing by its evaporation, the evaporated working fluid (14) being fed to a heat exchanger (10) to be condensed and recycled.

EP 0 051 953 A1

- 1 -

## A COOLING DEVICE FOR A BEARING

This invention relates to a bearing and more particularly to a cooling device for a bearing.

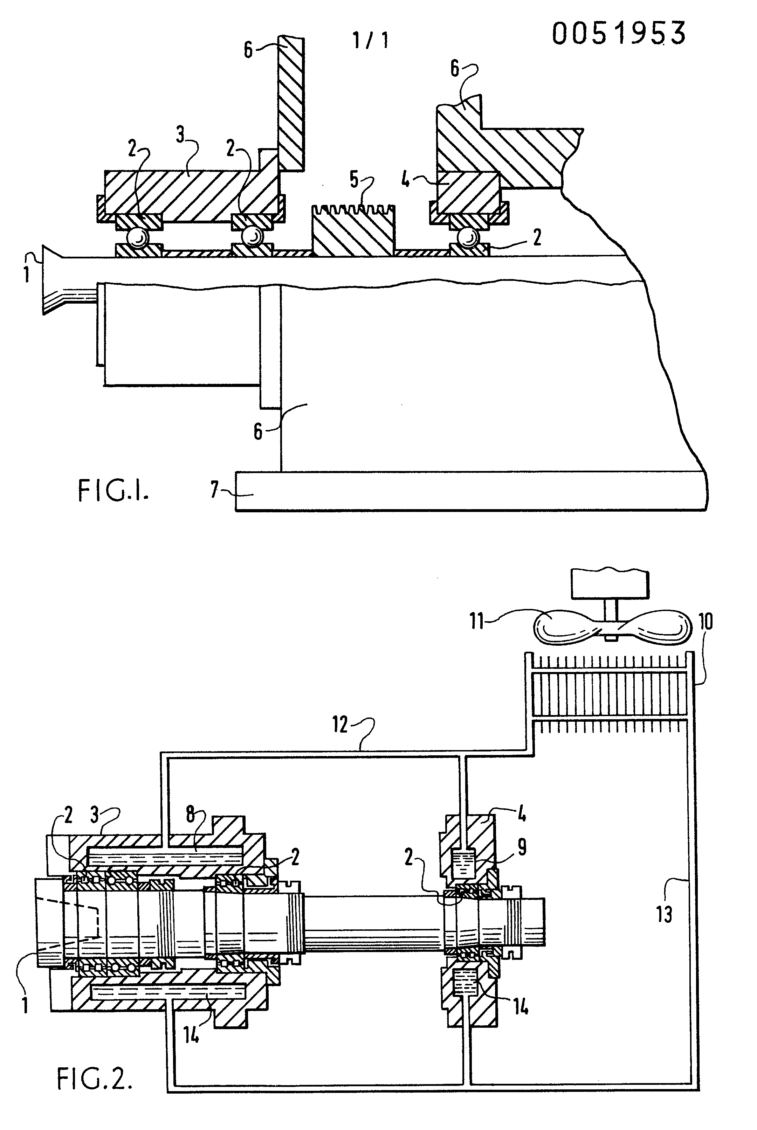

As a cooling device for a bearing, one for a machine tool has been publicly known as shown in Figure 1 of the attached drawings. In Figure 1, reference numeral 1 designates a main spindle of a machine tool, 2 bearings such as ball bearings, 3 a front bearing support, 4 a rear bearing support, and 5 a pulley adapted to be driven externally through belts by an electric motor (not shown). 6 is the frame of the machine tool on which are mounted the main spindle 1, bearings 2, bearing supports 3, 4, and pulley 5, the frame 6 being mounted on a bed 7 together with the machine parts 1 to 5 as above mentioned.

The operation of the machine tool comprising these elements is as follows:

The torque transmitted to pulley 5 through the belts from the electric motor rotates the main spindle 1. In this case the bearings 2 disposed between the main spindle 1 and the front and rear bearing supports 3, 4 have the purpose of maintaining a smooth rotation of main spindle 1, but they inevitably generate heat due to rolling friction, as a result of which the bearing supports 3 and 4 have their temperature raised by heat conveyed from the bearings 2 so that they are subject to various deformations and strains. Consequently, the centre line of main spindle 1 of the machine tool may be displaced in a vertical, horizontal or axial direction as the case may be, thus reducing the machining accuracy.

The invention seeks to reduce the above disadvantage and provides a cooling device for a bearing comprising a bearing support (3, 4) adapted to support said bearing in position, a hollow chamber (8, 9) formed within said bearing support (3, 4), a working fluid (14) within said hollow chamber, and a heat exchanger (10) connected to said hollow chamber by two pipes.

The invention will now be described further, by way of example with reference to the accompanying drawings, wherein:

Figure 1 is as previously described, a partial sectional view of a bearing portion of a conventional machine tool; and

Figure 2 is a longitudinal sectional view of a preferred embodiment of the cooling device for a bearing means in accordance with the present invention.

Referring now to Figure 2 of the attached drawings, the reference numerals 1, 2, 3 and 4 denote a main spindle, bearings, a front bearing support, and a rear bearing support, respectively, each generally corresponding to those shown in Figure 1 and having the same reference numerals as previously allocated. Annular hollow chambers 8, 9 are formed within the front and rear bearing supports 3 and 4, respectively. A heat exchanger 10 located at any appropriate position is cooled by a cooling fan 11 disposed nearby.

Pipes 12 and 13 connect the heat exchanger 10 to the annular hollow chambers 8, 9, the pipes 12 and 13 serving as a vapour pipe and a liquid pipe, respectively. A predetermined amount of refrigerant or working fluid 14 such as ammonia or a fluorocarbon is introduced into the cooling circuit formed of the chambers 8, 9, the pipes 12, 13 and the heat exchanger 10 after having been evacuated by any suitable procedure.

The operation of the cooling device in accordance with the present invention constructed as described above will be explained in reference to Figure 2.

The heat generated in front bearing support 3 and rear bearing support 4 as the result of the rotation of main spindle 1 heats the working fluid 14 within both annular hollow chambers 8, 9 and the latter evaporates, thereby removing heat from the bearing as the latent heat of evaporation. The evaporated working fluid 14 moves under the vapour pressure of the working fluid itself to the heat exchanger 10 through vapour pipe 12. There, the working fluid 14 in vapour form is cooled by the surrounding air forced by the cooling fan 11, and condenses to a liquid, the latent heat of condensation being discharged to the atmosphere. Thus, it will be appreciated that the heat generated at front and rear bearing supports 3, 4 is discharged at heat exchanger 10 to the atmosphere. The condensed working fluid in radiating means 10 returns by gravity to front and rear bearing supports 3 and 4 through liquid pipe 13 to be recycled.

From the foregoing, it will be apparent that, in accordance with the present invention, the provision of an annular hollow chamber within a bearing support means to contain a predetermined quantity of a working fluid therein and a heat exchanger connected to the hollow chamber by a pair of pipes makes it possible to rapidly and effectively remove the heat generated in the bearing through the bearing support on which the bearing is mounted by the evaporation of the working fluid. Therefore, when the present invention is embodied in bearings for e.g. a machine tool, the bearings to rotatively support the main spindle are always kept at a lower temperature so that thermal distortion or strain of the main spindle due to the heat generation of the bearings is effectively suppressed, improving the machining accuracy of the machine tool.

Although the present invention has been described above in reference to its single preferred embodiment shown in Figure 2, it would be understood that the present invention is not limited thereto, instead it may be subjected to various changes and modifications without departing from the scope of the appended claims.

**0051953**

- 5 -

1.    A cooling device for a bearing comprising a bearing support (3, 4) adapted to support said bearing in position, a hollow chamber (8, 9) formed within said bearing support (3, 4) a working fluid (14) within said hollow chamber, and a heat exchanger (10) connected to said hollow chamber by two pipes.

2.    A cooling device for a bearing as claimed in claim 1 wherein one of said pipes is a vapour pipe for conveying vapour  to the heat exchanger and the other is a liquid pipe to return condensed vapour to the hollow chamber.

3.    A cooling device for a bearing as claimed in claim 1 or 2 wherein a plurality of bearing supports (3 and 4) is provided.

4.    A cooling device for a bearing as claimed in claim 1, wherein said working fluid is ammonia or a fluorocarbon.

5.    A cooling device for a bearing as claimed in claim 1, in combination with bearings supporting a main spindle in a machine tool.

FIG.1.

FIG.2.

# EUROPEAN SEARCH REPORT

European Patent Office

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| X | US - A - 3 698 514 (W.E. BUCK et al.) <br> * column 2, lines 16 to 21; fig. 1,2 * | 1-3 | F 16 C 37/00 |
| | DE - A1 - 2 744 918 (HONEYWELL GMBH) <br> * claims 1,3; fig. 1 * | 1,2 | |
| A | DE - B - 1 170 199 (COLLET & ENGELHARD MASCHINENFABRIK GMBH) <br> * claim 1; fig. 1 * | | |
| A | FR - A5 - 2 239 150 ( CIE INDUSTRIELLE DES TELECOMMUNICATIONS CIT-ALCATEL) <br> * fig. 1 * | | F 16 C 37/00 |
| A | US - A - 4 137 997 (S. ANDO) <br> * claim 6; fig. * | | |
| A | Patents Abstracts of Japan <br> Vol. 1, No. 113, 29 September 1977 <br> page 3498M77 <br> & JP - A - 52 - 50438 | | |

**TECHNICAL FIELDS SEARCHED (Int. Cl.3)**

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 08-01-1982 | MASSALSKI |

EPO Form 1503.1 06.78